# EUROPEAN PATENT APPLICATION

(11) **EP 4 542 051 A1**
(43) Date of publication of application: **23.04.2025**
(21) Application number: 23823970.1
(22) Date of filing: 15.06.2023
(51) Int. Cl.: F04D 29/041

(54) **PUMP DEVICE**

(30) Priority: 17.06.2022 JP 2022098295
(71) Applicant: EBARA CORPORATION, Ota-ku, Tokyo 144-8510 (JP)
(72) Inventor: HONDA, Shuichiro, Tokyo 144-8510 (JP); KASATANI, Tetsuji, Tokyo 144-8510 (JP); IWAMI, Mitsutaka, Tokyo 144-8510 (JP); WATAJI, Kei, Tokyo 144-8510 (JP); IKEDA, Hayato, Tokyo 144-8510 (JP)
(74) Representative: Schmidbauer, Andreas Konrad
(86) International application number: PCT/JP2023/022219
(87) International publication number: WO 2023/243680

(57) **Abstract**

The present invention relates to a pump apparatus for pressurizing liquid hydrogen, and more particularly to a pump apparatus equipped with a thrust balance mechanism for canceling axial thrust acting on an impeller. The pump apparatus includes a rotation shaft (1), a plurality of impellers (2a to 2h) fixed to the rotation shaft (1), bearings (5, 6) for rotatably supporting the rotation shaft (1), a pump casing (7) for housing the plurality of impellers (2a to 2h), and a first thrust balance mechanism (20) and a second thrust balance mechanism (40) for canceling the weight of a rotor including the rotation shaft (1) and the plurality of impellers (2a to 2h) and the axial thrust acting on the plurality of impellers (2a to 2h).

## Description

### Technical Field

The present invention relates to a pump apparatus for pressurizing liquid hydrogen, and more particularly to a pump apparatus having a thrust balance mechanism for cancelling axial thrust applied to an impeller.

### Background Art

Hydrogen is expected to be an energy source that does not generate carbon dioxide which may cause global warming. Applications of hydrogen as an energy source include fuel cell and turbine power generation. Since hydrogen is in a gaseous state at room temperature, hydrogen is cooled and liquefied for storage and transportation of hydrogen.

Liquid hydrogen is temporarily stored in a tank and then transported to a power plant, factory, or the like by a pump apparatus. The pump apparatus is a device for pressurizing the liquid hydrogen and transporting it to a desired location. Generally, a vertical centrifugal pump apparatus is used for this purpose. This type of pump apparatus includes a rotation shaft extending vertically, an impeller fixed to the rotation shaft, and bearing that rotatably supports the rotation shaft.

### Citation List

### Patent Literature

Patent document 1: Japanese laid-open patent publication No. 2007-16750
Patent document 2: Japanese laid-open patent publication No. 2011-047301

### Summary of Invention

### Technical Problem

During operation of the pump apparatus, suction-side pressure and discharge-side pressure are applied to the impeller. An axial thrust equivalent to a difference between the suction-side pressure and the discharge-side pressure acts on the rotation shaft, and the axial thrust is received by the bearing supporting the rotation shaft. The bearing is immersed in liquid hydrogen and is lubricated by the liquid hydrogen. However, since liquid hydrogen has a very low viscosity, the bearing is prone to wear. In particular, in the vertical pump, in addition to the axial thrust, weight of rotational structure (including the rotation shaft and the impeller) is applied to the bearing, which makes the bearing prone to wear and results in a shortened bearing life.

Therefore, as disclosed in Patent Document 1, a pump apparatus may be equipped with a thrust balance mechanism that cancels the axial thrust applied to the bearing. This thrust balance mechanism has a high-pressure chamber filled with a high-pressure fluid and a low-pressure chamber filled with a low-pressure fluid. The thrust balance mechanism is configured to generate an upward force by a pressure difference between the high-pressure fluid and the low-pressure fluid, and to cancel the axial thrust and the weight of the rotor with this upward force. Therefore, the thrust balance mechanism is expected to reduce the load applied to the bearing to substantially zero.

However, as compared to other liquefied gases, such as liquefied natural gas (LNG) and liquefied petroleum gas (LPG), liquid hydrogen has a low density, and it is difficult to pressurize liquid hydrogen to a high pressure by rotating the impeller. Therefore, the difference in pressure between the high-pressure chamber and the low-pressure chamber cannot make the upward force large. As a result, the upward force generated by the thrust balance mechanism is not large enough to cancel the axial thrust and the weight of the rotor, and a large load may be applied to the bearing.

Furthermore, liquid hydrogen is more easily gasified than other liquefied gases, such as liquefied natural gas (LNG) and liquefied petroleum gas (LPG). Therefore, when liquid hydrogen moves from the high-pressure chamber to the low-pressure chamber of the thrust balance mechanism, a part of the liquid hydrogen may be gasified due to a drop in pressure of the liquid hydrogen, thus forming bubbles. If such bubbles are sucked into the impeller, the pump apparatus may not be able to exert its intended pumping performance. In addition, the pump apparatus may vibrate due to the intake of bubbles.

Therefore, the present invention provides a pump apparatus that can reduce a load applied to a bearing to substantially zero during steady operation and can prevent gasification of liquid hydrogen.

### Solution to Problem

In an embodiment, there is provided a pump apparatus for pressurizing liquid hydrogen, comprising: a rotation shaft; a plurality of impellers fixed to the rotation shaft; a bearing configured to rotatably support the rotation shaft; a pump casing in which the plurality of impellers are disposed; and a first thrust balance mechanism and a second thrust balance mechanism configured to cancel weight of a rotational structure including the rotation shaft and the plurality of impellers and an axial thrust acting on the plurality of impellers, wherein the second thrust balance mechanism includes: a wall structure having a low-pressure chamber and a high-pressure chamber formed therein; and a partition located in the wall structure and located between the low-pressure chamber and the high-pressure chamber, the pump apparatus further comprises: an intermediate communication line providing fluid communication between the high-pressure chamber and a discharge side of an intermediate-stage impeller or a final-stage impeller of the plurality of impellers; and a return line providing fluid communication between the low-pressure chamber and a discharge side of a suction-side impeller located upstream of the intermediate-stage impeller or the final-stage impeller.

In an embodiment, the pump apparatus further comprises a check valve attached to the return line to allow the liquid hydrogen to flow only from the low-pressure chamber to the suction-side impeller.

In an embodiment, the pump apparatus further comprises: an upstream communication line that provides fluid communication between the high-pressure chamber and a discharge side of an upstream impeller located between the intermediate-stage impeller or the final-stage impeller and the suction-side impeller; and a check valve attached to the upstream communication line to allow the liquid hydrogen to flow only from the upstream impeller to the high-pressure chamber.

In an embodiment, the first thrust balance mechanism is disposed at a discharge side of the plurality of impellers, and the second thrust balance mechanism is disposed at a suction side of the plurality of impellers.

In an embodiment, the pump apparatus further comprises: a suction container having a suction port for the liquid hydrogen and surrounding the pump casing; and a gas relief line extending from the wall structure to an upper region in the suction container, the gas relief line having a lower end opening located above the low-pressure chamber and facing an outer circumferential surface of the rotation shaft.

In an embodiment, the wall structure has an inner circumferential surface parallel to an axial direction of the rotation shaft, the partition has an outer circumferential surface parallel to the axial direction of the rotation shaft, and the entire outer circumferential surface of the partition is surrounded by the inner circumferential surface of the wall structure with a gap formed therebetween.

In an embodiment, wherein the second thrust balance mechanism further includes a balance chamber located between the low-pressure chamber and the high-pressure chamber, a variable gap is formed between the partition and the wall structure, and a magnitude of the variable gap changes according to an axial position of the rotation shaft.

In an embodiment, the first thrust balance mechanism and the second thrust balance mechanism are disposed at a discharge side of the plurality of impellers.

In an embodiment, the first thrust balance mechanism includes: a first wall structure having a first low-pressure chamber, a first balance chamber, and a first high-pressure chamber formed therein; and the first partition located in the first wall structure and between the first low-pressure chamber and the first balance chamber, wherein a variable gap is formed between the first partition and the rotational structure including the rotation shaft and the plurality of impellers, and a magnitude of the variable gap changes according to an axial position of the rotation shaft.

In an embodiment, the first thrust balance mechanism includes: a first wall structure having a first low-pressure chamber and a first high-pressure chamber formed therein; and the first partition located in the first wall structure and between the first low-pressure chamber and the first high-pressure chamber, wherein a radial gap is formed between an outer circumferential surface of the first partition and an inner circumferential surface of the first wall structure, and a magnitude of the radial gap does not change regardless of an axial position of the rotation shaft.

In an embodiment, there is provided a pump apparatus for pressurizing liquid hydrogen, comprising: a rotation shaft; a plurality of impellers fixed to the rotation shaft; a bearing configured to rotatably support the rotation shaft; a pump casing in which the plurality of impellers are disposed; a suction container having a suction port for the liquid hydrogen and surrounding the pump casing; a gas relief line; and a thrust balance mechanism configured to cancel weight of a rotational structure including the rotation shaft and the plurality of impellers and an axial thrust acting on the plurality of impellers, wherein the thrust balance mechanism includes: a wall structure having a low-pressure chamber and a high-pressure chamber formed therein; and a partition disposed in the wall structure and between the low-pressure chamber and the high-pressure chamber, the gas relief line extends from the wall structure to an upper region in the suction container, and the gas relief line has a lower end communicating with the low-pressure chamber.

### Advantageous Effects of Invention

According to the present invention, the first thrust balance mechanism and the second thrust balance mechanism can generate a force large enough to cancel the rotational structure (including the rotation shaft and the impeller) and the axial thrust. Therefore, the load applied to the bearing supporting the rotation shaft can be made substantially zero. Furthermore, according to the present invention, the low-pressure chamber of the second thrust balance mechanism communicates with the discharge side of the suction-side impeller through the return line, so that generation of bubbles can be prevented when liquid hydrogen moves from the high-pressure chamber to the low-pressure chamber. Therefore, bubbles are not sucked into the impeller, and the pump apparatus can exhibit its intended pumping performance. Moreover, vibration due to intake of bubbles can be prevented.

### Brief Description of Drawings

[FIG. 1] FIG. 1 is a cross-sectional view showing an embodiment of a pump apparatus;
[FIG. 2] FIG. 2 is an enlarged cross-sectional view showing an embodiment of a first thrust balance mechanism;
[FIG. 3] FIG. 3 is an enlarged cross-sectional view of the first thrust balance mechanism when a downward axial thrust is increased;
[FIG. 4] FIG. 4 is an enlarged cross-sectional view showing an embodiment of a second thrust balance mechanism;
[FIG. 5] FIG. 5 is an enlarged cross-sectional view showing another embodiment of the pump apparatus;
[FIG. 6] FIG. 6 is an enlarged sectional view showing yet another embodiment of the pump apparatus;
[FIG. 7] FIG. 7 is an enlarged sectional view showing yet another embodiment of the pump apparatus;
[FIG. 8] FIG. 8 is an enlarged sectional view showing yet another embodiment of the second thrust balance mechanism;
[FIG. 9] FIG. 9 is an enlarged sectional view showing yet another embodiment of the first thrust balance mechanism;
[FIG. 10] FIG. 10 is an enlarged sectional view showing yet another embodiment of the first thrust balance mechanism;
[FIG. 11] FIG. 11 is an enlarged sectional view showing yet another embodiment of the first thrust balance mechanism;
[FIG. 12] FIG. 12 is an enlarged sectional view showing yet another embodiment of the first thrust balance mechanism;
[FIG. 13] FIG. 13 is an enlarged sectional view showing yet another embodiment of the first thrust balance mechanism;
[FIG. 14] FIG. 14 is an enlarged sectional view showing yet another embodiment of the first thrust balance mechanism;
[FIG. 15] FIG. 15 is a sectional view showing yet another embodiment of the pump apparatus;
[FIG. 16] FIG. 16 is an enlarged sectional view showing an embodiment of the second thrust balance mechanism shown in FIG. 15;
[FIG. 17] FIG. 17 is an enlarged sectional view showing yet another embodiment of the pump apparatus;
[FIG. 18] FIG. 18 is an enlarged sectional view showing an embodiment of the second thrust balance mechanism shown in FIG. 17;
[FIG. 19] FIG. 19 is an enlarged sectional view showing yet another embodiment of the pump apparatus; and
[FIG. 20] FIG. 20 is an enlarged sectional view showing yet another embodiment of the pump apparatus.

### Description of Embodiments

Embodiments of the present invention will now be described with reference to the drawings.

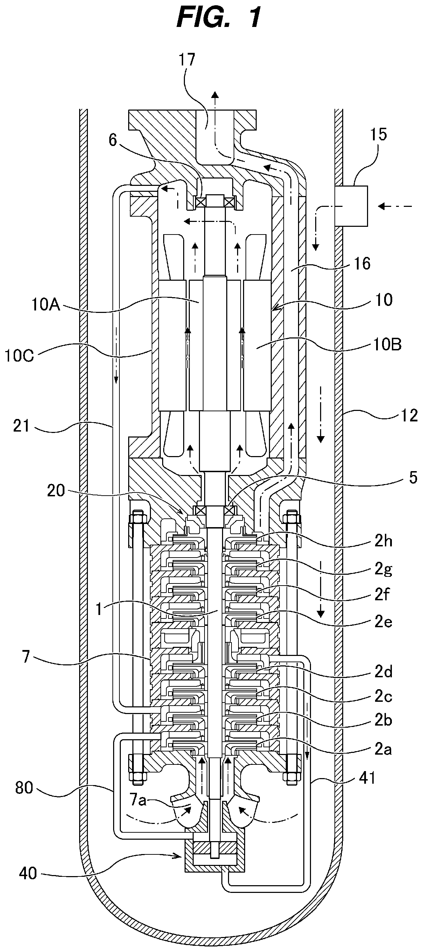

FIG. 1 is a cross-sectional view showing an embodiment of a pump apparatus. The pump apparatus of this embodiment described below is a centrifugal pump apparatus used to pressurize liquid hydrogen.

As shown in FIG. 1, the pump apparatus includes a rotation shaft 1, a plurality of impellers 2a to 2h fixed to the rotation shaft 1, bearings 5 and 6 that rotatably support the rotation shaft 1, and a pump casing 7 that accommodates the impellers 2a to 2h therein. The rotation shaft 1 extends in a vertical direction, and the plurality of impellers 2a to 2h are fixed to the rotation shaft 1. The pump apparatus having the rotation shaft 1 that extends in the vertical direction is called a vertical pump apparatus. The plurality of impellers 2a to 2h face the same direction (or face downward in this embodiment) and are arranged in series along the rotation shaft 1. The number of impellers 2a to 2h is not limited to this embodiment.

The pump apparatus further includes an electric motor 10 coupled to the rotation shaft 1. The electric motor 10 includes a motor rotor 10A fixed to the rotation shaft 1, a motor stator 10B surrounding the motor rotor 10A, and a motor housing 10C accommodating the motor stator 10B therein. The motor housing 10C is fixed to the pump casing 7.

The electric motor 10 is configured to be capable of rotating the rotation shaft 1 and the impellers 2a to 2h together. In this embodiment, the electric motor 10 is an immersible motor that can contact liquid hydrogen. Specifically, during operation of the pump apparatus, the motor rotor 10A and the motor stator 10B are immersed in liquid hydrogen and are cooled by liquid hydrogen. In one embodiment, at least one of the motor rotor 10A and the motor stator 10B may have a sealed structure that does not allow inflow of liquid.

The pump apparatus includes a suction container 12 surrounding a pump casing 7 and an electric motor 10. The suction container 12 is arranged vertically. The suction container 12 has a suction port 15 for liquid hydrogen. The suction port 15 is provided on a side surface of the suction container 12. In one embodiment, the suction port 15 may be provided on a top surface or a bottom surface of the suction container 12. The liquid hydrogen is introduced into the suction container 12 through the suction port 15. During operation of the pump apparatus, an interior of the suction container 12 is filled with the liquid hydrogen. Thus, the entire pump casing 7 and the electric motor 10 are immersed in the liquid hydrogen.

The bearings 5, 6 are mounted to an upper side and a lower side of the electric motor 10. In this embodiment, the bearings 5, 6 are ball bearings capable of supporting both radial and axial loads. In one embodiment, the bearings 5, 6 may be plain bearings (or slide bearing). During operation of the pump apparatus, the bearings 5, 6 are immersed in the liquid hydrogen and are lubricated and cooled by the liquid hydrogen.

The pump casing 7 has an inlet 7a for the liquid hydrogen. When the electric motor 10 rotates the impellers 2a to 2h, the liquid hydrogen in the suction container 12 flows into the pump casing 7 through the inlet 7a. The liquid hydrogen is pressurized in the pump casing 7 as the impellers 2a to 2h rotate. The pressurized liquid hydrogen is discharged from the pump apparatus through a discharge passage 16 and an outlet 17. The discharge passage 16 is formed in the pump casing 7 and the motor housing 10C, and the outlet 17 is formed in the motor housing 10C. As described above, a part of the pressurized liquid hydrogen contacts the bearings 5, 6 and the electric motor 10.

The pump apparatus further includes a first thrust balance mechanism 20 and a second thrust balance mechanism 40 that cancel weight of a rotational structure including at least the rotation shaft 1 and the impellers 2a to 2h and cancel an axial thrust acting on the impellers 2a to 2h. The first thrust balance mechanism 20 is located at a discharge side of the impellers 2a to 2h. More specifically, the first thrust balance mechanism 20 is disposed between the impeller 2h at a final stage and the electric motor 10. A part of the liquid hydrogen pressurized by the rotation of the impellers 2a to 2h flows through the first thrust balance mechanism 20 and further comes into contact with the bearings 5, 6 and the electric motor 10 to cool the bearings 5, 6 and the electric motor 10. The liquid hydrogen is returned to a low pressure side of the pump casing 7 through a communication line 21.

One end of the communication line 21 is coupled to the motor housing 10C of the electric motor 10 and communicates with an interior of the motor housing 10C. The other end of the communication line 21 is coupled to the pump casing 7 and communicates with a low-pressure region in the pump casing 7. More specifically, the other end of the communication line 21 communicates with the interior of the pump casing 7 at a position between the first-stage impeller 2a and the final-stage impeller 2h. Therefore, the communication line 21 communicates with a discharge side of any one of the impellers 2a to 2h.

The connection position of the communication line 21 and the pump casing 7 is appropriately determined based on factors, such as the weight of the rotational structure (including the rotation shaft 1 and the impellers 2a to 2h). In this embodiment, when the multiple impellers 2a to 2h are divided into a low-pressure group of impellers 2a to 2d including the first-stage impeller 2a and a high-pressure group of impellers 2e to 2h including the final-stage impeller 2h, the communication line 21 communicates with the interior of the pump casing 7 at the position of the low-pressure group.

The liquid hydrogen in the motor housing 10C is returned to the pump casing 7 through the communication line 21. Therefore, the pressure of the liquid hydrogen in the motor housing 10C is substantially the same as the pressure in the low pressure side of the pump casing 7. In this embodiment, the communication line 21 communicates with the interior of the pump casing 7 at a position of the second-stage impeller 2b (i.e., the communication line 21 communicates with a discharge side of the impeller 2b). However, the communication line 21 may communicate with the interior of the pump casing 7 at a position of another stage impeller.

In one embodiment, the communication line 21 may communicate with the interior of the suction container 12 without being coupled to the pump casing 7. In this case, the pressure of the liquid hydrogen in the motor housing 10C is substantially the same as the pressure at the suction side of the impeller 2a (i.e., the pressure before being boosted by the impellers 2a to 2h).

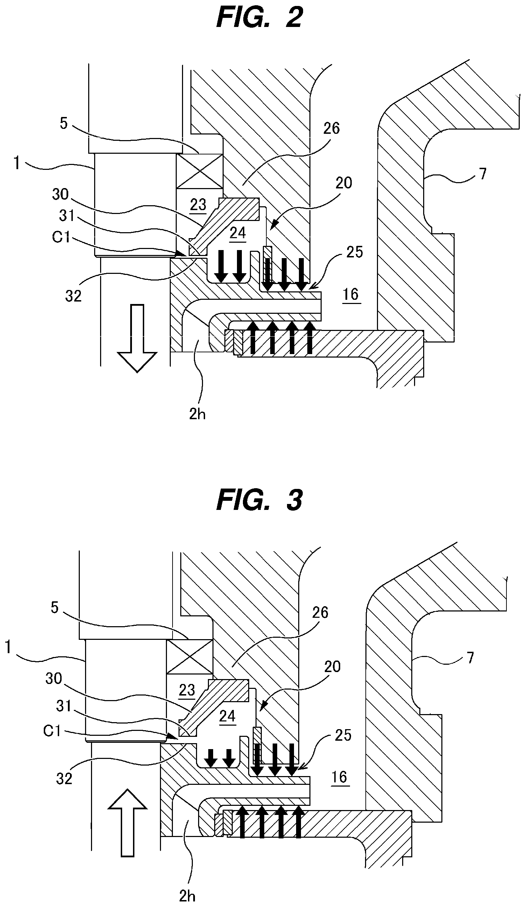

FIG. 2 is an enlarged view of the first thrust balance mechanism 20. As shown in FIG. 2, the first thrust balance mechanism 20 includes a first wall structure 26 having a first low-pressure chamber 23, a first balance chamber 24, and a first high-pressure chamber 25 formed therein, and a first partition 30 located within the first wall structure 26 and between the first low-pressure chamber 23 and the first balance chamber 24. The names of the first low-pressure chamber 23 and the first high-pressure chamber 25 mean that the pressure in the first low-pressure chamber 23 is lower than the pressure in the first high-pressure chamber 25, and do not mean that the pressure in the first low-pressure chamber 23 is lower than a specific pressure, and that the pressure in the first high-pressure chamber 25 is higher than a specific pressure.

The first low-pressure chamber 23, the first balance chamber 24, and the first high-pressure chamber 25 are located at a back side of the final-stage impeller 2h. The first partition 30 is located between the first low-pressure chamber 23 and the first balance chamber 24. The bearing 5 is disposed in the first low-pressure chamber 23. The first high-pressure chamber 25 and the first balance chamber 24 face the back side of the final-stage impeller 2h. An axial gap C1 is formed between the first partition 30 and the rotational structure (including the rotation shaft 1 and the impellers 2a to 2h).

In this embodiment, the first partition 30 is fixed to the first wall structure 26. The first partition 30 has a stationary surface 31 inclined with respect to the axial direction of the rotation shaft 1. The back side of the final-stage impeller 2h, which is a part of the rotational structure, has a movable surface 32 parallel to the stationary surface 31. In this embodiment, the stationary surface 31 and the movable surface 32 are perpendicular to the axial direction of the rotation shaft 1. In one embodiment, the stationary surface 31 and the movable surface 32 may not be perpendicular to the axial direction of the rotation shaft 1 as long as the stationary surface 31 and the movable surface 32 are inclined with respect to the axial direction of the rotation shaft 1.

The variable gap C1 is formed between the stationary surface 31 of the first partition 30 and the movable surface 32 of the final-stage impeller 2h. A magnitude of the gap C1 varies with the axial movement of the rotation shaft 1. The first thrust balance mechanism 20 shown in FIG. 2 is a variable-gap type in which the magnitude of the axial gap C1 varies depending on the axial position of the rotation shaft 1. Such a variable-gap type may be called a variable orifice type.

In one embodiment, the first partition 30 may be fixed to the rotational structure (e.g., the rotation shaft 1 or the final-stage impeller 2h) and may be configured to rotate together with the rotation shaft 1. In this configuration, the first partition 30 has a movable surface inclined with respect to the axial direction of the rotation shaft 1, and the first wall structure 26 has a stationary surface parallel to the movable surface. An axial variable gap whose magnitude varies with the axial movement of the rotation shaft 1 is formed between the movable surface of the first partition 30 and the stationary surface of the first wall structure 26.

In the embodiment shown in FIG. 2, a part of the liquid hydrogen pressurized by the rotation of the multiple impellers 2a to 2h including the final-stage impeller 2h flows to a front surface of the final-stage impeller 2h and the first high-pressure chamber 25. The liquid hydrogen in the first high-pressure chamber 25 further flows into the first balance chamber 24. When the rotation shaft 1 and the impellers 2a to 2h move upward, the axial gap C1 between the first partition 30 and the final-stage impeller 2h becomes smaller. As a result, the pressure in the first balance chamber 24 increases. A difference between the pressure of the liquid hydrogen in the first balance chamber 24 and the first high-pressure chamber 25 and the pressure applied to the front surface of the final-stage impeller 2h generates a downward force, which acts on the final-stage impeller 2h.

On the other hand, when the rotation shaft 1 and the impellers 2a to 2h move downward, as shown in FIG. 3, the axial gap C1 increases, and as a result, the pressure in the first balance chamber 24 decreases. The difference between the pressure of the liquid hydrogen in the first balance chamber 24 and the first high-pressure chamber 25 and the pressure applied to the front surface of the final-stage impeller 2h generates an upward force, which acts on the final-stage impeller 2h. In this manner, the first thrust balance mechanism 20 can generate the upward force that bears the weight of the rotational structure (including at least the rotation shaft 1 and the multiple impellers 2a to 2h) and the downward axial thrust acting on the multiple impellers 2a to 2h.

The liquid hydrogen has a density that is very low compared to other liquids, such as water, etc. Therefore, the upward force generated by the first thrust balance mechanism 20 may not be able to cancel the weight of the rotational structure and the downward axial thrust.

Therefore, as shown in FIG. 1, the pump apparatus of this embodiment includes a second thrust balance mechanism 40 in addition to the first thrust balance mechanism 20. In the embodiment shown in FIG. 1, the second thrust balance mechanism 40 is located at the suction side of all the impellers 2a to 2h (i.e., below the impellers 2a to 2h). Furthermore, the second thrust balance mechanism 40 is located outside the pump casing 7. More specifically, the second thrust balance mechanism 40 is located below the inlet 7a of the pump casing 7.

The second thrust balance mechanism 40 communicates with the interior of the pump casing 7 through an intermediate communication line 41 and a return line 80. Ends of the intermediate communication line 41 and the return line 80 are coupled to the second thrust balance mechanism 40. The other ends of the intermediate communication line 41 and the return line 80 are coupled to the pump casing 7 and communicate with the interior of the pump casing 7. More specifically, the other end of the intermediate communication line 41 is coupled to the pump casing 7 at a position of the discharge side of the intermediate-stage impeller 2d of the multiple impellers 2a to 2h, and communicates with the interior of the pump casing 7. The other end of the return line 80 is coupled to the pump casing 7 at a position between the suction side of the intermediate-stage impeller 2d and the discharge side of the first-stage impeller 2a which is the suction-side impeller, and communicates with the interior of the pump casing 7. In this embodiment, the other end of the return line 80 is coupled to the discharge side of the first-stage impeller 2a, which is the suction-side impeller located upstream of the intermediate-stage impeller 2d.

The second thrust balance mechanism 40 is surrounded by the suction container 12, and the second thrust balance mechanism 40 is immersed in the liquid hydrogen in the suction container 12. In this embodiment, the entire second thrust balance mechanism 40 is surrounded by the suction container 12. In one embodiment, a portion of the second thrust balance mechanism 40 may be surrounded by the suction container 12, and another portion may be located outside the suction container 12.

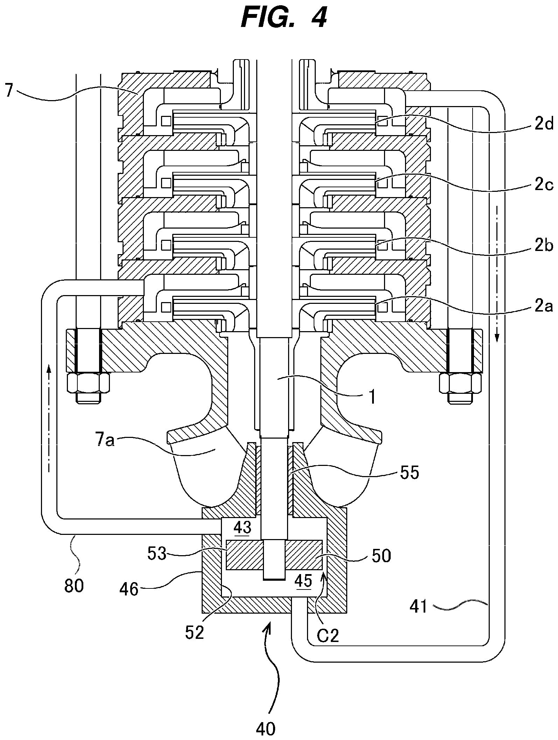

FIG. 4 is an enlarged cross-sectional view showing an embodiment of the second thrust balance mechanism 40. As shown in FIG. 4, the second thrust balance mechanism 40 includes a second wall structure 46 having a second low-pressure chamber 43 and a second high-pressure chamber 45 formed therein, and a second partition 50 located in the second wall structure 46 and located between the second low-pressure chamber 43 and the second high-pressure chamber 45. The second partition 50 is coupled to rotation shaft 1. The second high-pressure chamber 45 is located below the second low-pressure chamber 43. The names of the second low-pressure chamber 43 and the second high-pressure chamber 45 mean that the pressure in the second low-pressure chamber 43 is lower than the pressure in the second high-pressure chamber 45, and do not mean that the pressure in the second low-pressure chamber 43 is lower than a specific pressure, and that the pressure in the second high-pressure chamber 45 is higher than a specific pressure.

One end of the intermediate communication line 41 is coupled to the second wall structure 46 and communicates with the second high-pressure chamber 45. The other end of the intermediate communication line 41 communicates with the discharge side of one of the multiple impellers 2a to 2h. More specifically, the other end of the intermediate communication line 41 is coupled to the pump casing 7 at a position of the discharge side of one of the multiple impellers 2a to 2h and communicates with the interior of the pump casing 7. In this embodiment, the second high-pressure chamber 45 communicates with the discharge side of the intermediate-stage impeller 2d through the intermediate communication line 41. Specifically, the other end of the intermediate communication line 41 communicates with the interior of the pump casing 7 at the position of the discharge side of the impeller 2d. In one embodiment, the other end of the intermediate communication line 41 may communicate with a discharge side of another-stage impeller serving as the intermediate-stage impeller.

One end of the return line 80 is coupled to the second wall structure 46 and communicates with the second low-pressure chamber 43. The other end of the return line 80 is coupled to the pump casing 7 at a position of the discharge side of the first-stage impeller 2a, which is the suction-side impeller located upstream of the intermediate-stage impeller 2d, and communicates with the interior of the pump casing 7. Therefore, the return line 80 provides fluid communication between the discharge side of the first-stage impeller 2a (i.e., the suction-side impeller) and the second low-pressure chamber 43. In one embodiment, the suction-side impeller may be an impeller other than the first-stage impeller 2a (for example, the second-stage impeller 2b) as long as the suction-side impeller is located upstream of the intermediate-stage impeller 2d.

The second partition 50 has a piston shape and is fixed to a lower end of the rotation shaft 1. The second partition 50 rotates together with the rotation shaft 1 within the second wall structure 46 and is capable of moving in the axial direction together with the rotation shaft 1. The second wall structure 46 has an inner circumferential surface 52 parallel to the axial direction of the rotation shaft 1, and the second partition 50 has an outer circumferential surface 53 parallel to the axial direction of the rotation shaft 1. The entire outer circumferential surface 53 of the second partition 50 is surrounded by the inner circumferential surface 52 of the second wall structure 46 with a gap C2 formed therebetween. The second partition 50 is capable of moving in the axial direction within the second wall structure 46 in association with the axial movement of the rotation shaft 1.

There is the radial gap C2 between the outer circumferential surface 53 of the second partition 50 and the inner circumferential surface 52 of the second wall structure 46. A magnitude of the radial gap C2 is constant regardless of the axial position of the rotation shaft 1. The second thrust balance mechanism 40 of this embodiment is a fixed-gap type in which the magnitude of the radial gap C2 does not change regardless of the axial position of the rotation shaft 1. Such a fixed-gap type may be called a fixed orifice type.

The liquid hydrogen filling the second high-pressure chamber 45 moves through the radial gap C2 into the second low-pressure chamber 43. The liquid hydrogen flows from the second low-pressure chamber 43 through the return line 80 into the interior of the pump casing 7. In order to control a flow rate of the liquid hydrogen passing through the radial gap C2, a groove (axial groove, spiral groove, circumferential groove, etc.) may be provided on at least one of the inner circumferential surface 52 and the outer circumferential surface 53.

The pressure in the second low-pressure chamber 43 is substantially equal to the pressure at the discharge side of the impeller 2a. Therefore, the second partition 50 receives an upward force generated from a difference between the pressure in the second high-pressure chamber 45 and the pressure in the second low-pressure chamber 43. This upward force is generated by the second thrust balance mechanism 40, and can bear the weight of the rotational structure (including at least the rotation shaft 1 and the impellers 2a to 2h) and the axial thrust acting on the impellers 2a to 2h. The upward force generated by the second thrust balance mechanism 40 is established by the difference between the pressure in the second high-pressure chamber 45 and the pressure in the second low-pressure chamber 43, and does not change depending on the axial position of the rotation shaft 1.

The combination of the upward force generated by the first thrust balance mechanism 20 and the upward force generated by the second thrust balance mechanism 40 can cancel out the weight of the rotational structure (including at least the rotation shaft 1 and the impellers 2a to 2h) and the axial thrust acting on the impellers 2a to 2h. Therefore, the axial thrust acting on the bearings 5 and 6 becomes substantially zero, and the service lives of the bearings 5 and 6 are extended.

The return line 80 provides the fluid communication between the discharge side of the first-stage impeller 2a, which is the suction-side impeller, and the second low-pressure chamber 43. Therefore, during operation of the pump apparatus, the pressure in the second low-pressure chamber 43 is substantially the same as the pressure at the discharge side of the first-stage impeller 2a. Specifically, the pressure in the second low-pressure chamber 43 is substantially the same as the pressure boosted by the first-stage impeller 2a. When the liquid hydrogen moves from the second high-pressure chamber 45 through the radial gap C2 to the second low-pressure chamber 43, the pressure of the liquid hydrogen decreases. Since the pressure in the second low-pressure chamber 43 is substantially the same as the pressure boosted by the first-stage impeller 2a, the liquid hydrogen is unlikely to vaporize. The liquid hydrogen returned from the second low-pressure chamber 43 through the return line 80 to the pump casing 7 does not contain bubbles, so that the pump apparatus can exert its intended pumping performance and can prevent vibrations caused by intake of bubbles.

When the liquid hydrogen filling the second high-pressure chamber 45 moves through the gap C2 to the second low-pressure chamber 43, the liquid hydrogen forms a liquid film in the gap C2. This liquid film functions as a bearing that supports the rotational structure including the rotation shaft 1 and the multiple impellers 2a to 2h, and contributes to improving the stability of the rotational structure. In particular, such a bearing function of the second thrust balance mechanism 40 is advantageous for the multi-stage pump apparatus having the multiple impellers. Specifically, the multi-stage pump apparatus having the multiple impellers has a long shaft length and an increased number of elements that rotate and vibrate, which can cause a problem in the stability of the rotational structure including the multiple impellers. The liquid film formed in the gap C2 can improve the stability of the rotational structure.

The density of liquid hydrogen is about one-sixth the density of liquefied natural gas. When the pump apparatus handles such liquid hydrogen, it is difficult for the first thrust balance mechanism 20 alone to generate a sufficient upward force to support the rotational structure. According to this embodiment, the first thrust balance mechanism 20 and the second thrust balance mechanism 40 can generate an upward force large enough to bear the weight of the rotational structure and the axial thrust. In particular, by appropriately setting the connection position of the intermediate communication line 41 and the pump casing 7, the second thrust balance mechanism 40 can generate an optimal upward force.

The second thrust balance mechanism 40 constitutes a liquid-hydrogen loop completely independent of that of the first thrust balance mechanism 20. Specifically, the pressure in the second high-pressure chamber 45 of the second thrust balance mechanism 40 corresponds to the pressure at the discharge side of the intermediate-stage impeller of the multiple impellers 2a to 2h. The pressure in the second high-pressure chamber 45 varies depending on the connection position of the intermediate communication line 41 and the pump casing 7. Therefore, an appropriate connection position of the intermediate communication line 41 and the pump casing 7 is determined based on the weight of the rotational structure and the upward force required to cancel out the axial thrust acting on the impellers 2a to 2h.

As shown in FIG. 4, a plain bearing 55 may be provided above the second thrust balance mechanism 40. In the embodiment shown in FIG. 4, the plain bearing 55 is located above the second thrust balance mechanism 40 and below the impellers 2a to 2h.

In this embodiment, the intermediate communication line 41 is coupled to the discharge side of the impeller 2d, which is an example of the intermediate-stage impeller. In another embodiment, in order to generate the necessary upward force, the intermediate communication line 41 may be coupled to a discharge side of another impeller (e.g., the third-stage impeller 2c, the fourth-stage impeller 2e, or the final-stage impeller 2h) as the intermediate-stage impeller. The return line 80 is coupled to the discharge side of the first-stage impeller 2a which is the suction-side impeller located upstream of the intermediate-stage impeller 2d. In one embodiment, the return line 80 may be coupled to a discharge side of another impeller (e.g., the second-stage impeller 2b) located upstream of the intermediate-stage impeller 2d.

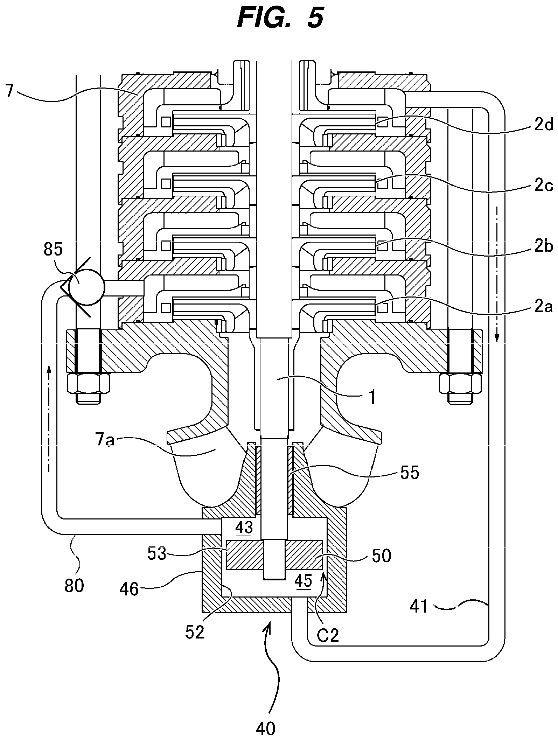

FIG. 5 is an enlarged cross-sectional view showing another embodiment of the pump apparatus. Configuration and operation of this embodiment that will not be specifically described are the same as those of the embodiments described with reference to FIGS. 1 to 4, and therefore duplicated descriptions will be omitted. As shown in FIG. 5, in this embodiment, the pump apparatus further includes a check valve 85 attached to the return line 80. This check valve 85 is configured to allow only the flow of liquid hydrogen from the second low-pressure chamber 43 toward the discharge side of the first-stage impeller 2a.

The check valve 85 functions when the pump apparatus is started. Specifically, the check valve 85 prevents the liquid hydrogen from flowing from the discharge side of the first-stage impeller 2a, which is the suction-side impeller, to the second low-pressure chamber 43 immediately after the pump apparatus is started when the pressure in the second high-pressure chamber 45 is low. Therefore, the check valve 85 can prevent the second thrust balance mechanism 40 from generating a temporary downward axial thrust immediately after the pump apparatus is started.

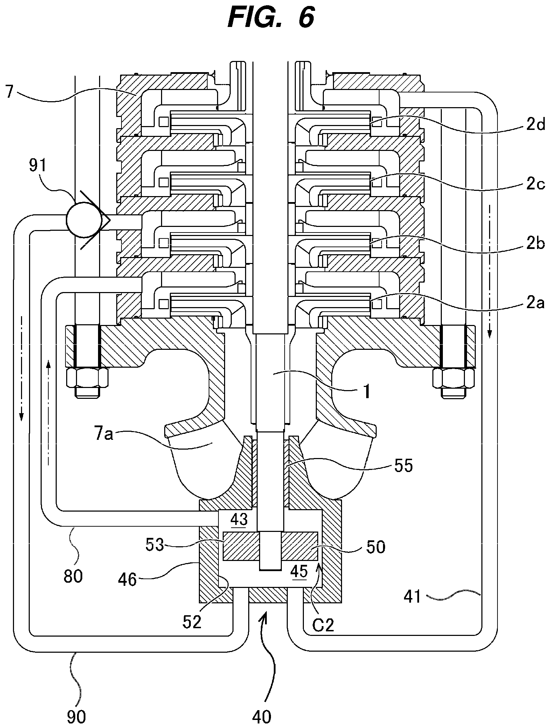

FIG. 6 is an enlarged cross-sectional view showing yet another embodiment of the pump apparatus. Configuration and operation of this embodiment that will not be specifically described are the same as those of the embodiments described with reference to FIG. 5, and therefore duplicated descriptions will be omitted. As shown in FIG. 6, the pump apparatus further includes an upstream communication line 90 that provides fluid communication between the discharge side of the second-stage impeller 2b, which is an upstream impeller, and the second high-pressure chamber 45, and a check valve 91 attached to the upstream communication line 90. The check valve 91 is configured to allow only flow of the liquid hydrogen from the discharge side of the impeller 2b toward the second high-pressure chamber 45.

One end of the upstream communication line 90 is coupled to the pump casing 7 at the discharge side of the second-stage impeller 2b, which is the upstream impeller, and communicates with the interior of the pump casing 7. The upstream impeller is located between the first-stage impeller 2a, which is the suction-side impeller, and the impeller 2d, which is the intermediate-stage impeller. In this embodiment, the upstream impeller is the second-stage impeller 2b, while the upstream impeller may be another impeller (for example, the third-stage impeller 2c) as long as the upstream impeller is located between the suction-side impeller and the intermediate-stage impeller. The other end of the upstream communication line 90 is coupled to the second wall structure 46 and communicates with the second high-pressure chamber 45.

The upstream communication line 90 functions when the pump apparatus is started. Specifically, immediately after the pump apparatus is started, the first thrust balance mechanism 20 and the second thrust balance mechanism 40 cannot generate a sufficient upward force. The liquid hydrogen is first pressurized by the rotation of the first-stage impeller 2a, and then pressurized by the rotation of the second-stage impeller 2b. A part of the pressurized liquid hydrogen flows into the second high-pressure chamber 45 through the upstream communication line 90. Therefore, a pressure difference occurs between the second low-pressure chamber 43 and the second high-pressure chamber 45, and this pressure difference generates an upward force.

In this manner, according to this embodiment, the second thrust balance mechanism 40 can generate an upward force in the initial operation stage before the steady operation of the pump apparatus, thereby reducing the load on the bearings 5 and 6 (see FIG. 1) and extending the service lives of the bearings 5 and 6.

When the liquid hydrogen is pressurized by the rotation of the intermediate-stage impeller 2d, a part of the pressurized liquid hydrogen flows into the second high-pressure chamber 45 through the intermediate communication line 41. Since the pressure in the second high-pressure chamber 45 is higher than the pressure at the discharge side of the second-stage impeller 2b, the check valve 91 operates and prevents the liquid hydrogen from flowing back from the second high-pressure chamber 45 to the second-stage impeller 2b.

In the embodiment shown in FIG. 6, the intermediate communication line 41 and the upstream communication line 90 are two independent lines that do not intersect with each other, while in one embodiment, a portion of the intermediate communication line 41 and a portion of the upstream communication line 90 may be combined to form a collecting line.

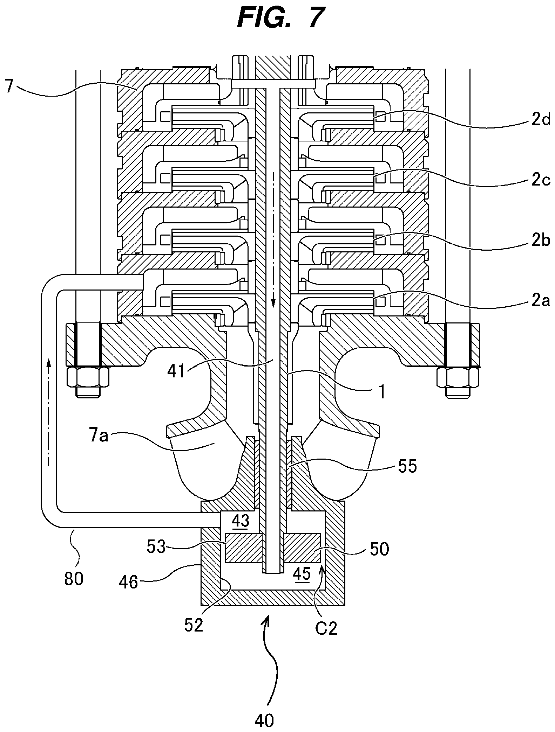

In FIGS. 4 to 6, the intermediate communication line 41 extending to the second high-pressure chamber 45 is disposed outside the pump casing 7 and the second wall structure 46. In one embodiment, as shown in FIG. 7, the intermediate communication line 41 may extend through the inside of the rotation shaft 1. In the embodiment shown in FIG. 7, one end of the intermediate communication line 41 communicates with the discharge side of the intermediate-stage impeller 2d, and the other end of the intermediate communication line 41 communicates with the second high-pressure chamber 45.

In FIG. 7, a part of the liquid hydrogen pressurized by the rotation of the impellers 2a to 2d flows into the second high-pressure chamber 45 through the intermediate communication line 41 provided in the rotation shaft 1. No external pipe is required as the intermediate communication line 41.

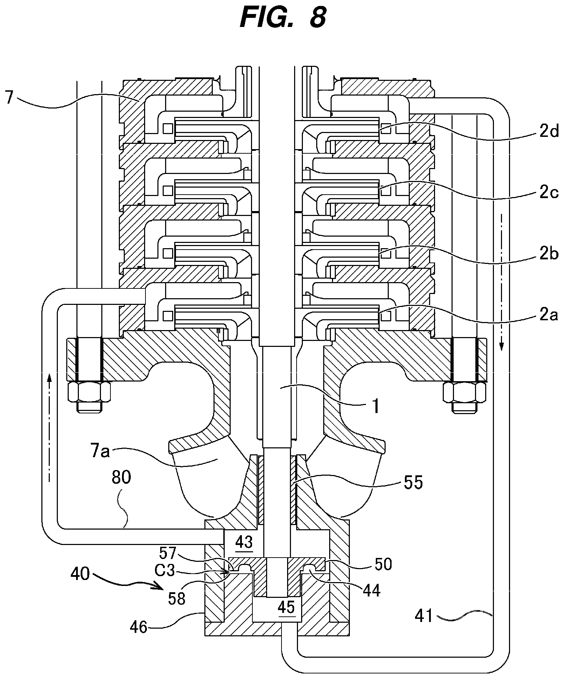

FIG. 8 is an enlarged cross-sectional view showing another embodiment of the second thrust balance mechanism 40. Configuration of this embodiment that will not be particularly described is the same as the configuration shown in FIG. 4, and repetitive description will be omitted. As shown in FIG. 8, the second thrust balance mechanism 40 further has a second balance chamber 44 located between the second low-pressure chamber 43 and the second high-pressure chamber 45. The second partition 50 has a movable surface 57 inclined with respect to the axial direction of the rotation shaft 1, and the second wall structure 46 has a stationary surface 58 parallel to the movable surface 57. In this embodiment, the movable surface 57 and the stationary surface 58 are perpendicular to the axial direction of the rotation shaft 1. In one embodiment, the movable surface 57 and the stationary surface 58 may not be perpendicular to the axial direction of the rotation shaft 1 as long as the movable surface 57 and the stationary surface 58 are inclined with respect to the axial direction of the rotation shaft 1.

The movable surface 57 is located above the stationary surface 58. The second partition 50 is movable in the axial direction together with the rotation shaft 1, and therefore a magnitude of an axial gap C3 between the movable surface 57 and the stationary surface 58 changes with the axial movement of the rotation shaft 1 and the second partition 50. In other words, the axial gap C3 is a variable gap whose magnitude changes according to the axial position of the rotation shaft 1. This type of variable-gap type is called a variable orifice type.

The liquid hydrogen flows into the second high-pressure chamber 45 through the intermediate communication line 41 and further flows into the second balance chamber 44 and fills the second balance chamber 44. Furthermore, the liquid hydrogen in the second balance chamber 44 moves to the second low-pressure chamber 43 through the axial gap C3. When the rotation shaft 1 moves downward, the axial gap C3 becomes smaller, and the pressure in the second balance chamber 44 increases. As a result, the second thrust balance mechanism 40 generates a large upward force and the rotation shaft 1 moves upward. When the rotation shaft 1 moves upward, the axial gap C3 becomes larger, and the pressure in the second balance chamber 44 decreases. As a result, the force generated by the second thrust balance mechanism 40 decreases, and the rotation shaft 1 moves downward. In this way, the second thrust balance mechanism 40 can generate the upward force that changes with the axial movement of the rotation shaft 1. According to this embodiment, when the liquid hydrogen filling the second high-pressure chamber 45 moves to the second low-pressure chamber 43, the liquid hydrogen forms a liquid film in a gap between the second partition 50 and the second wall structure 46. This liquid film functions as a bearing that supports the rotational structure including the rotation shaft 1 and the multiple impellers 2a to 2h, and contributes to improving the stability of the rotational structure.

The embodiments described with reference to FIGS. 5 to 7 may be applied to the embodiment described with reference to FIG. 8.

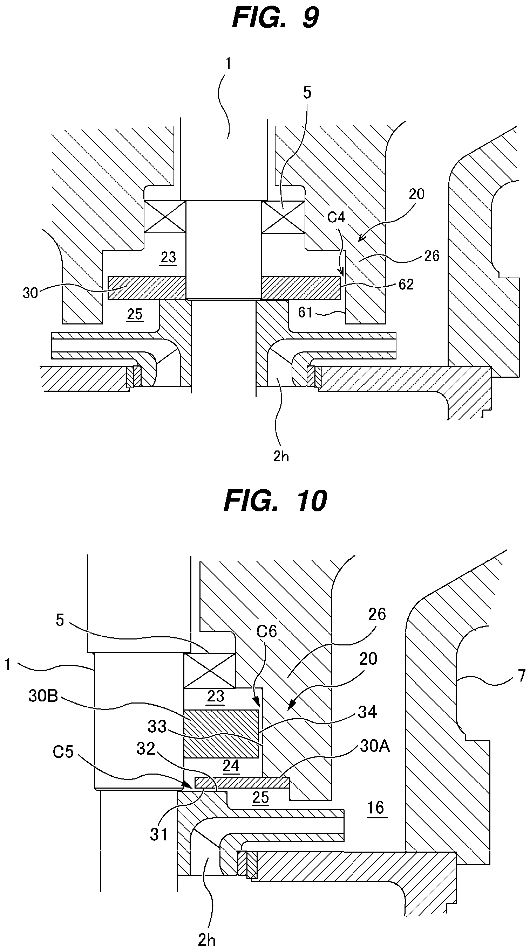

The second thrust balance mechanism 40 shown in FIG. 8 is of a variable-gap type having the axial gap C3 whose magnitude varies depending on the axial position of the rotation shaft 1. When the second thrust balance mechanism 40 of such a variable-gap type is employed, the first thrust balance mechanism 20 may be of a fixed-gap type which will be described below with reference to FIG. 9.

FIG. 9 is an enlarged cross-sectional view showing another embodiment of the first thrust balance mechanism 20. As shown in FIG. 9, the first thrust balance mechanism 20 includes first wall structure 26 having first low-pressure chamber 23 and first high-pressure chamber 25 formed therein, and first partition 30 located in the first wall structure 26 and between the first low-pressure chamber 23 and the first high-pressure chamber 25. The first high-pressure chamber 25 is located below the first low-pressure chamber 23. Configurations of this embodiment that are not particularly described are the same as those of the embodiment described with reference to FIGS. 1 to 3, and duplicated description will be omitted.

The first low-pressure chamber 23 communicates with the low-pressure side of the pump casing 7 through the communication line 21 (see FIG. 1). Therefore, the pressure in the first low-pressure chamber 23 is substantially the same as the pressure in the low-pressure side of the pump casing 7. In one embodiment, the communication line 21 may not be coupled to the pump casing 7, but may communicate with the interior of the suction container 12. In this case, the pressure in the first low-pressure chamber 23 is substantially the same as the pressure at the suction side of the impeller 2a (i.e., the pressure before being boosted by the impellers 2a to 2h).

The first high-pressure chamber 25 is located at the discharge side of the final-stage impeller 2h. The first partition 30 has a piston shape and is fixed to the rotation shaft 1. The first partition 30 rotates together with the rotation shaft 1 in the first wall structure 26 and can move in the axial direction together with the rotation shaft 1. The first wall structure 26 has an inner circumferential surface 61 parallel to the axial direction of the rotation shaft 1, and the first partition 30 has an outer circumferential surface 62 parallel to the axial direction of the rotation shaft 1. The entire outer circumferential surface 62 of the first partition 30 is surrounded by the inner circumferential surface 61 of the first wall structure 26 with a gap C4 formed therebetween. Therefore, the first partition 30 can move in the axial direction in the first wall structure 26 together with the axial movement of the rotation shaft 1.

There is the radial gap C4 between the outer circumferential surface 62 of the first partition 30 and the inner circumferential surface 61 of the first wall structure 26. A magnitude of the radial gap C4 is constant regardless of the axial position of the rotation shaft 1. The first thrust balance mechanism 20 of this embodiment is a fixed-gap type in which the magnitude of the radial gap C4 does not change regardless of the axial position of the rotation shaft 1. The fixed-gap type is called a fixed orifice type.

A part of the liquid hydrogen pressurized by the rotation of the impellers 2a to 2h flows into the first high-pressure chamber 25. The liquid hydrogen that fills the first high-pressure chamber 25 moves to the first low-pressure chamber 23 through the gap C4 formed between the outer circumferential surface 62 of the first partition 30 and the inner circumferential surface 61 of the first wall structure 26. The pressure in the first low-pressure chamber 23 is substantially equal to the pressure in the pump casing 7 at the connection position of the communication line 21 and the pump casing 7. Therefore, the first partition 30 receives an upward force generated by the difference between the pressure in the first high-pressure chamber 25 and the pressure in the first low-pressure chamber 23.

The liquid hydrogen in the first low-pressure chamber 23 passes through the bearing 5 and further flows into the electric motor 10 (see FIG. 1). The liquid hydrogen contacts the bearing 6 and is returned to the low-pressure side of the pump casing 7 through the communication line 21 (see FIG. 1). In one embodiment, the liquid hydrogen may be returned into the suction container 12.

FIG. 10 is an enlarged cross-sectional view showing yet another embodiment of the first thrust balance mechanism 20. Configurations of this embodiment that will not be particularly described are the same as those of the embodiments described with reference to FIGS. 1 to 3, and repetitive description will be omitted. As shown in FIG. 10, the first thrust balance mechanism 20 includes first wall structure 26 having first low-pressure chamber 23 and first high-pressure chamber 25 formed therein, and first fixed-side partition 30A and first rotation-side partition 30B located in the first wall structure 26 and between the first low-pressure chamber 23 and the first high-pressure chamber 25. The first fixed-side partition 30A is fixed to the first wall structure 26, and the first rotation-side partition 30B is fixed to the rotation shaft 1. Therefore, the first fixed-side partition 30A is a stationary member, and the first rotation-side partition 30B is a rotating member.

The first fixed-side partition 30A is located below the first rotation-side partition 30B. The first balance chamber 24 is located between the first fixed-side partition 30A and the first rotation-side partition 30B. The first fixed-side partition 30A is located between the first balance chamber 24 and the first high-pressure chamber 25, and the first rotation-side partition 30B is located between the first balance chamber 24 and the first low-pressure chamber 23.

The first fixed-side partition 30A has a stationary surface 31, and the bask side of the final-stage impeller 2h, which is a part of the rotational structure, has a movable surface 32 parallel to the stationary surface 31. A variable gap (variable orifice) C5 is formed between the stationary surface 31 of the first fixed-side partition 30A and the movable surface 32 of the final-stage impeller 2h. A magnitude of the gap C5 changes with the axial movement of the rotation shaft 1.

The first rotation-side partition 30B has a piston shape and is fixed to the rotation shaft 1. The first rotation-side partition 30B rotates together with the rotation shaft 1 in the first wall structure 26 and can move in the axial direction together with the rotation shaft 1. The first wall structure 26 has inner circumferential surface 33 parallel to the axial direction of the rotation shaft 1, and the first rotation-side partition 30B has outer circumferential surface 34 parallel to the axial direction of the rotation shaft 1. The entire outer circumferential surface 34 of the first rotation-side partition 30B is surrounded by the inner circumferential surface 33 of the first wall structure 26 with a gap C6 formed therebetween. The first rotation-side partition 30B can move in the axial direction in the first wall structure 26 together with the axial movement of the rotation shaft 1.

A magnitude of the radial gap C6 formed between the outer circumferential surface 34 of the first rotation-side partition 30B and the inner circumferential surface 33 of the first wall structure 26 is constant regardless of the axial position of the rotation shaft 1. Therefore, the gap C6 is a fixed gap (fixed orifice).

A part of the liquid hydrogen pressurized by the rotation of the multiple impellers 2a to 2h flows into the first high-pressure chamber 25. The liquid hydrogen in the first high-pressure chamber 25 passes through the gap C5 (variable orifice) into the first balance chamber 24. The liquid hydrogen in the first balance chamber 24 passes through the gap C6 (fixed orifice) into the first low-pressure chamber 23. The pressure of the liquid hydrogen decreases as the liquid hydrogen passes through the gap C6. The pressure of the liquid hydrogen in the first balance chamber 24 changes according to the magnitude of the gap C5, and as a result, the upward force generated by the first thrust balance mechanism 20 changes.

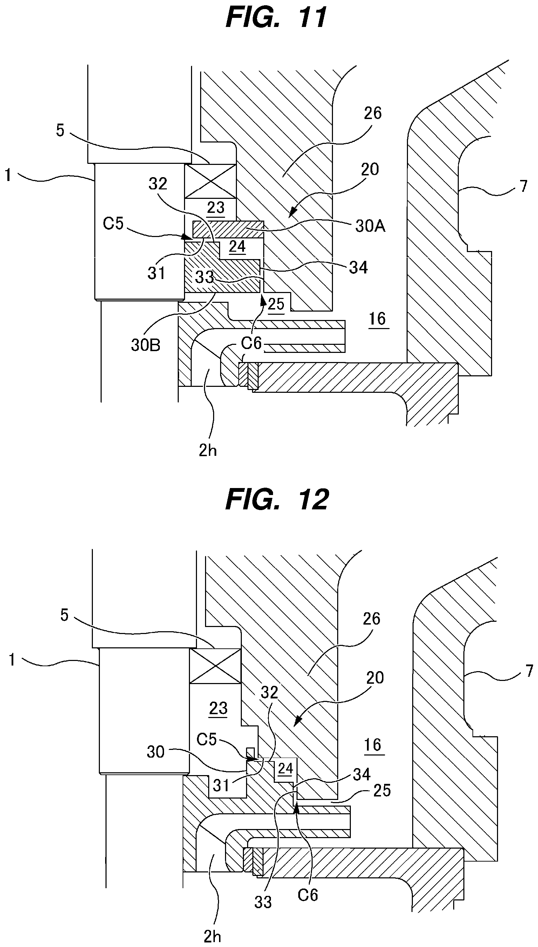

FIG. 11 is an enlarged cross-sectional view showing yet another embodiment of the first thrust balance mechanism 20. Configurations of this embodiment that will not be particularly described are the same as those of the embodiment described with reference to FIG. 10, and duplicated description will be omitted. As shown in FIG. 11, the first fixed-side partition 30A is located above the first rotation-side partition 30B. The first balance chamber 24 is located between the first fixed-side partition 30A and the first rotation-side partition 30B. The first rotation-side partition 30B is located between the first balance chamber 24 and the first high-pressure chamber 25, and the first fixed-side partition 30A is located between the first balance chamber 24 and the first low-pressure chamber 23.

The first fixed-side partition 30A has stationary surface 31, and the first rotation-side partition 30B has movable surface 32 parallel to the stationary surface 31. Variable gap (variable orifice) C5 whose magnitude changes with the axial movement of the rotation shaft 1 is formed between the stationary surface 31 of the first fixed-side partition 30A and the movable surface 32 of the first rotation-side partition 30B.

The entire outer circumferential surface 34 of the first rotation-side partition 30B is surrounded by the inner circumferential surface 33 of the first wall structure 26 with gap C6 formed therebetween. The first rotation-side partition 30B is movable in the axial direction in the first wall structure 26 in association with the axial movement of the rotation shaft 1. A magnitude of the radial gap C6 formed between the outer circumferential surface 34 of the first rotation-side partition 30B and the inner circumferential surface 33 of the first wall structure 26 is constant regardless of the axial position of the rotation shaft 1. Therefore, the gap C6 is a fixed gap (fixed orifice).

A part of the liquid hydrogen pressurized by the rotation of the multiple impellers 2a to 2h flows into the first high-pressure chamber 25. The liquid hydrogen in the first high-pressure chamber 25 passes through the gap C6 (fixed orifice) into the first balance chamber 24. The pressure of the liquid hydrogen decreases as the liquid hydrogen passes through the gap C6. The liquid hydrogen in the first balance chamber 24 passes through the gap C5 (variable orifice) into the first low-pressure chamber 23. The pressure of the liquid hydrogen in the first balance chamber 24 changes according to the magnitude of the gap C5, and as a result, the upward force generated by the first thrust balance mechanism 20 changes.

FIG. 12 is an enlarged cross-sectional view showing yet another embodiment of the first thrust balance mechanism 20. Configurations of this embodiment that will not be particularly described are the same as those of the embodiments described with reference to FIG. 1 to FIG. 3, and repetitive description will be omitted. As shown in FIG. 12, the first thrust balance mechanism 20 includes first wall structure 26 having first low-pressure chamber 23 and first high-pressure chamber 25 formed therein, and first partition 30 located in the first wall structure 26 and located between the first low-pressure chamber 23 and the first high-pressure chamber 25. The first partition 30 is integrally formed with the back side of the final-stage impeller 2h. Therefore, the first partition 30 rotates together with the rotation shaft 1 and can move axially together with the rotation shaft 1. In one embodiment, the first partition 30 may be a member separated from the impeller 2h.

The first wall structure 26 has stationary surface 31, and the first partition 30 has movable surface 32 parallel to the stationary surface 31. Variable gap (variable orifice) C5 whose magnitude changes with the axial movement of the rotation shaft 1 is formed between the stationary surface 31 of the first wall structure 26 and the movable surface 32 of the first partition 30.

The first wall structure 26 has inner circumferential surface 33 parallel to the axial direction of the rotation shaft 1, and the first partition 30 has outer circumferential surface 34 parallel to the axial direction of the rotation shaft 1. The entire outer circumferential surface 34 of the first partition 30 is surrounded by the inner circumferential surface 33 of the first wall structure 26 with gap C6 formed therebetween. A magnitude of the radial gap C6 formed between the outer circumferential surface 34 of the first partition 30 and the inner circumferential surface 33 of the first wall structure 26 is constant regardless of the axial position of the rotation shaft 1. Therefore, the gap C6 is a fixed gap (fixed orifice).

The first balance chamber 24 is formed by the first partition 30 and the first wall structure 26 and is located between the gap C6 (fixed orifice) and the gap C5 (variable orifice). The gap C6 is located between the first high-pressure chamber 25 and the first balance chamber 24, and the gap C5 is located between the first balance chamber 24 and the first low-pressure chamber 23.

A part of the liquid hydrogen pressurized by the rotation of the multiple impellers 2a to 2h flows into the first high-pressure chamber 25. The liquid hydrogen in the first high-pressure chamber 25 passes through the gap C6 (fixed orifice) into the first balance chamber 24. The pressure of the liquid hydrogen decreases as the liquid hydrogen passes through the gap C6. The liquid hydrogen in the first balance chamber 24 passes through the gap C5 (variable orifice) into the first low-pressure chamber 23. The pressure of the liquid hydrogen in the first balance chamber 24 changes according to the magnitude of the gap C5, and as a result, the upward force generated by the first thrust balance mechanism 20 changes.

In the embodiment shown in FIG. 12, the single variable gap (single variable orifice) C5 whose magnitude changes with the axial movement of the rotation shaft 1 is provided at the back side of the final-stage impeller 2h.

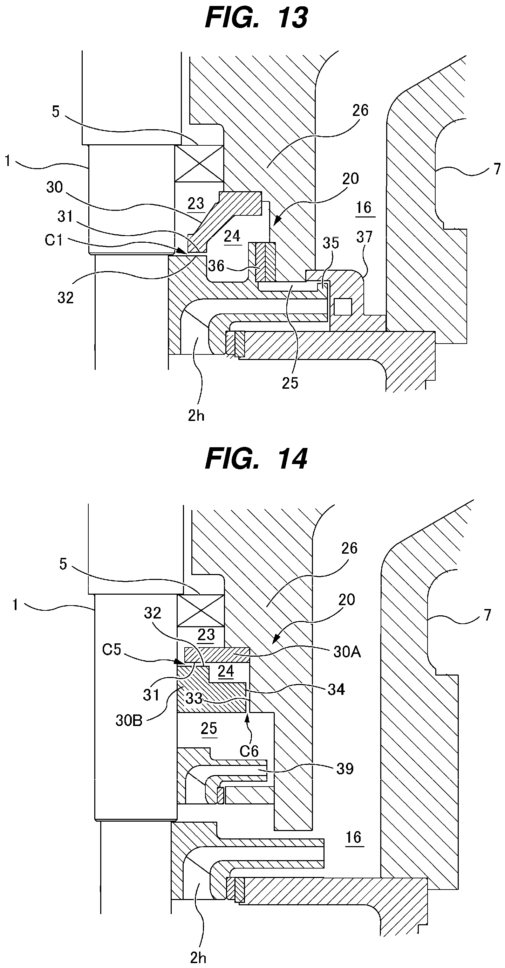

FIG. 13 is an enlarged cross-sectional view showing yet another embodiment of the first thrust balance mechanism 20. Configurations of this embodiment that will not be particularly described are the same as those of the embodiments described with reference to FIGS. 1 to 3, and therefore duplicated description will be omitted. As shown in FIG. 13, the pump apparatus includes a first wear ring 35 located on an outer periphery of the final-stage impeller 2h and a second wear ring 36 located on the back side of the impeller 2h. An outer circumferential surface of the first wear ring 35 faces an inner circumferential surface of a diffuser block 37 arranged radially outwardly of the impeller 2h.

The first wear ring 35 may be integral with the impeller 2h, or may be an individual member different from the impeller 2h. An outer circumferential surface of the second wear ring 36 faces an inner circumferential surface of the first wall structure 26. The second wear ring 36 may be an individual member different from the impeller 2h, or may be integral with the impeller 2h.

A part of the liquid hydrogen pressurized by the rotation of the impellers 2a to 2h flows into the first high-pressure chamber 25 through a small gap between the first wear ring 35 and the diffuser block 37. The liquid hydrogen in the first high-pressure chamber 25 flows into the first balance chamber 24 through a small gap between the second wear ring 36 and the first wall structure 26. The pressure of the liquid hydrogen decreases as the liquid hydrogen passes through the gap between the first wear ring 35 and the diffuser block 37 and the gap between the second wear ring 36 and the first wall structure 26. As a result, the pressure acting on the back side of the final-stage impeller 2h decreases, and the downward axial thrust decreases. The liquid hydrogen in the first balance chamber 24 flows into the first low-pressure chamber 23 through the gap C1 (variable orifice). The pressure of the liquid hydrogen in the first balance chamber 24 changes according to the magnitude of the gap C1. As a result, the upward force generated by the first thrust balance mechanism 20 changes.

In the embodiment shown in FIG. 13, two stages of the wear rings 35, 36 are provided, while only one stage of wear ring may be provided, or three or more stages of wear rings may be provided. The larger the diameter of the wear ring, the smaller the pressure acting on the back side of the impeller 2h, and the smaller the downward axial thrust. The position of the wear ring is not limited to the position in this embodiment, and the wear ring may be provided at another position. The wear ring 35 may be provided on another impeller, in addition to the final-stage impeller 2h.

FIG. 14 is an enlarged cross-sectional view showing yet another embodiment of the first thrust balance mechanism 20. Configurations of this embodiment that will not be particularly described are the same as those of the embodiment described with reference to FIG. 11, and therefore repetitive description will be omitted. As shown in FIG. 14, the pump apparatus has an auxiliary impeller 39 arranged between the final-stage impeller 2h and the first thrust balance mechanism 20. This auxiliary impeller 39 is located upstream of the first fixed-side partition 30A and the first rotation-side partition 30B. Specifically, the auxiliary impeller 39 is located between the final-stage impeller 2h and the first partitions 30A and 30B. The auxiliary impeller 39 is fixed to the rotation shaft 1 and rotates together with the rotation shaft 1. A liquid inlet of the auxiliary impeller 39 faces the back side of the final-stage impeller 2h.

A part of the liquid hydrogen pressurized by the rotation of the multiple impellers 2a to 2h is further pressurized by the rotation of the auxiliary impeller 39 and is discharged into the first high-pressure chamber 25. The pressurized liquid hydrogen flows into the first balance chamber 24 through the gap C6 (fixed orifice). The pressure of the liquid hydrogen decreases as the liquid hydrogen passes through the gap C6. The liquid hydrogen in the first balance chamber 24 flows into the first low-pressure chamber 23 through the gap C5 (variable orifice). The pressure of the liquid hydrogen in the first balance chamber 24 changes according to the magnitude of the gap C5, and as a result, the upward force generated by the first thrust balance mechanism 20 changes.

According to the embodiment shown in FIG. 14, the liquid hydrogen pressurized by the rotation of the multiple impellers 2a to 2h is further pressurized by the rotation of the auxiliary impeller 39. Therefore, the difference in pressure acting on front and back sides of the first rotation-side partition 30B becomes larger, and the first thrust balance mechanism 20 can generate a larger upward force.

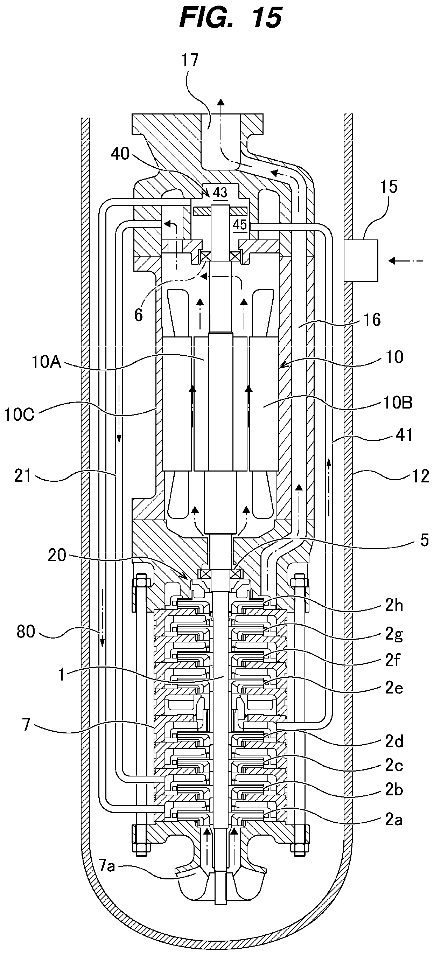

Next, another embodiment of the pump apparatus will be described with reference to FIG. 15. Configuration and operation of this embodiment that will not be specifically described are the same as those of the embodiments described with reference to FIGS. 1 to 4, and therefore the duplicated description will be omitted.

As shown in FIG. 15, the first thrust balance mechanism 20 and the second thrust balance mechanism 40 are disposed at the discharge side of the multiple impellers 2a to 2h. More specifically, the first thrust balance mechanism 20 is located at the discharge side of the final-stage impeller 2h, and the second thrust balance mechanism 40 is disposed at a higher position than the first thrust balance mechanism 20. The first thrust balance mechanism 20 is located between the multiple impellers 2a to 2h and the second thrust balance mechanism 40. In this embodiment, the electric motor 10 is located between the first thrust balance mechanism 20 and the second thrust balance mechanism 40, while the second thrust balance mechanism 40 may be located between the first thrust balance mechanism 20 and the electric motor 10.

The second high-pressure chamber 45 of the second thrust balance mechanism 40 communicates with the discharge side of the intermediate-stage impeller 2d of the multiple impellers 2a to 2h through the intermediate communication line 41. The second low-pressure chamber 43 communicates with the discharge side of the first-stage impeller 2a, which is the suction-side impeller located upstream of the intermediate-stage impeller 2d, through the return line 80.

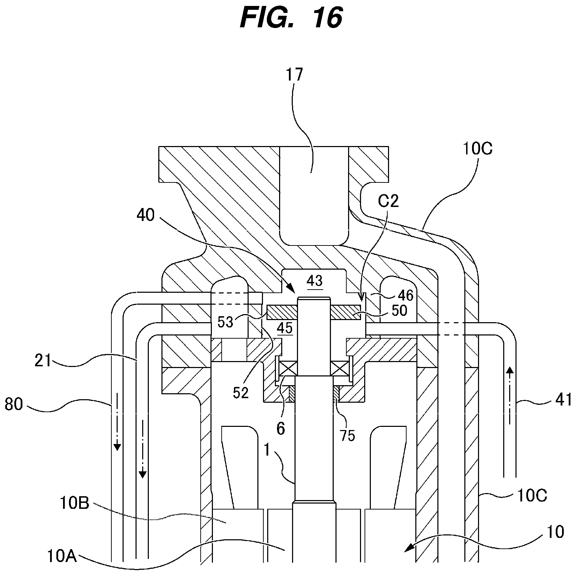

FIG. 16 is an enlarged cross-sectional view showing the second thrust balance mechanism 40 shown in FIG. 15. As shown in FIG. 16, the second thrust balance mechanism 40 is arranged in the motor housing 10C. The second thrust balance mechanism 40 includes second wall structure 46 having second low-pressure chamber 43 and second high-pressure chamber 45 formed therein, and second partition 50 located in the second wall structure 46 and between the second low-pressure chamber 43 and the second high-pressure chamber 45. The second high-pressure chamber 45 is located below the second low-pressure chamber 43.

The second partition 50 has a piston shape and is fixed to the upper end of the rotation shaft 1. The second partition 50 rotates together with the rotation shaft 1 in the second wall structure 46 and is capable of moving in the axial direction together with the rotation shaft 1. The second wall structure 46 has inner circumferential surface 52 parallel to the axial direction of the rotation shaft 1, and the second partition 50 has outer circumferential surface 53 parallel to the axial direction of the rotation shaft 1. The entire outer circumferential surface 53 of the second partition 50 is surrounded by the inner circumferential surface 52 of the second wall structure 46 with the gap C2 formed therebetween. Therefore, the second partition 50 is capable of moving in the axial direction in the second wall structure 46 together with the axial movement of the rotation shaft 1.

There is the radial gap C2 between the outer circumferential surface 53 of the second partition 50 and the inner circumferential surface 52 of the second wall structure 46. A magnitude of the radial gap C2 is constant regardless of the axial position of the rotation shaft 1. The second thrust balance mechanism 40 of this embodiment is a fixed-gap type in which the magnitude of the radial gap C2 does not change regardless of the axial position of the rotation shaft 1.

A wear ring 75 is fixed to the second wall structure 46 to seal a gap between the rotation shaft 1 and the second wall structure 46 that defines the second high-pressure chamber 45 therein. A slight gap (not shown) is formed between the rotation shaft 1 and the wear ring 75, and the wear ring 75 minimizes fluid communication between the motor housing 10C and the second high-pressure chamber 45. Therefore, the pressure in the second high-pressure chamber 45 is substantially equal to the pressure at the discharge side of the intermediate-stage impeller 2d.

In one embodiment, the second thrust balance mechanism 40 shown in FIGS. 15 and 16 may be of the variable gap type shown in FIG. 8. In this case, the first thrust balance mechanism 20 may be of the fixed gap type shown in FIG. 9. The embodiments described with reference to FIGS. 5 to 7 can be applied to the embodiments described with reference to FIGS. 15 and 16.

In one embodiment, it is possible to provide both the lower second thrust balance mechanism 40 described with reference to FIGS. 4 to 8 and the upper second thrust balance mechanism 40 described with reference to FIGS. 15 and 16.

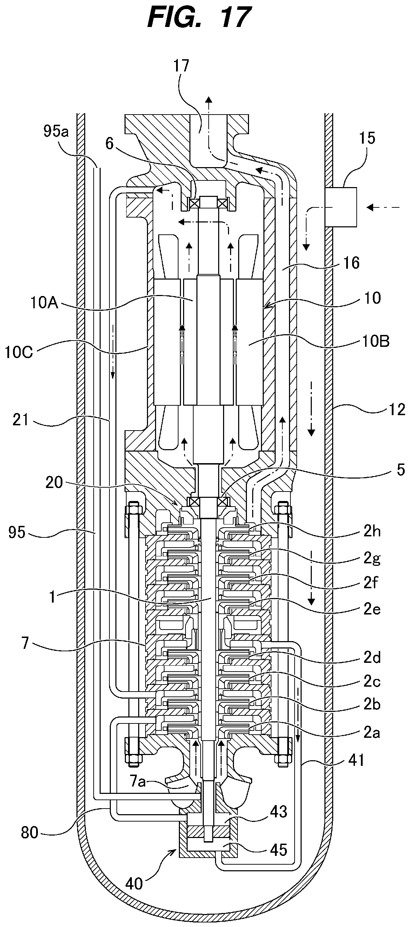

FIG. 17 is a cross-sectional view showing yet another embodiment of the pump apparatus. Configuration and operation of this embodiment that will not be specifically described are the same as those of the embodiments described with reference to FIGS. 1 to 4, and therefore the duplicated description will be omitted. As shown in FIG. 17, the pump apparatus further includes a gas relief line 95 extending from the second thrust balance mechanism 40 to an upper region in the suction container 12.

The gas relief line 95 is disposed outside the pump casing 7 and the electric motor 10, and the entire gas relief line 95 is disposed within the suction container 12. The gas relief line 95 extends upward from the second thrust balance mechanism 40 along the pump casing 7 and the electric motor 10. An upper end opening 95a of the gas relief line 95 is located within the suction container 12 and is located at a higher position than the suction port 15 of the suction container 12.

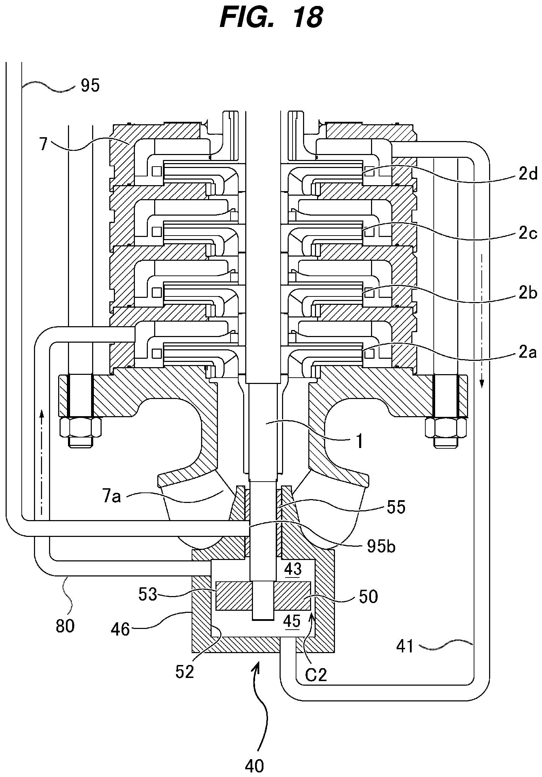

FIG. 18 is an enlarged cross-sectional view showing an embodiment of the second thrust balance mechanism 40 shown in FIG. 17. As shown in FIG. 18, a lower portion of the gas relief line 95 is coupled to the second wall structure 46. More specifically, the lower portion of the gas relief line 95 extends inside the second wall structure 46 and further penetrates the plain bearing 55 in the radial direction. A lower end opening 95b of the gas relief line 95 is located above the second low-pressure chamber 43 and below the inlet 7a of the pump casing 7 for the liquid hydrogen. The lower end opening 95b of the gas relief line 95 faces an outer circumferential surface of the rotation shaft 1. More specifically, the lower end opening 95b of the gas relief line 95 communicates with a gap between the outer circumferential surface of the rotation shaft 1 and the inner circumferential surface of the plain bearing 55. In one embodiment, the plain bearing 55 may not be provided. In such an embodiment, the lower end opening 95b of the gas relief line 95 communicates with a gap between the outer circumferential surface of the rotation shaft 1 and the inner circumferential surface of the second wall structure 46.

The gas relief line 95 is provided for the following reason. A part of the liquid hydrogen in the second low-pressure chamber 43 passes through the gap between the outer circumferential surface of the rotation shaft 1 and the inner circumferential surface of the plain bearing 55 and is discharged into the inlet 7a for the liquid hydrogen. When the liquid hydrogen flows through the gap between the outer circumferential surface of the rotation shaft 1 and the inner circumferential surface of the plain bearing 55, the pressure of the liquid hydrogen decreases, thus causing a part of the liquid hydrogen to be gasified into bubbles. If such bubbles are sucked into the impellers 2a to 2h, the pump apparatus may not be able to exert its intended pumping performance.

Thus, the pump apparatus in the embodiment shown in FIG. 18 has the gas release line 95 having the lower end opening 95b facing the outer circumferential surface of the rotation shaft 1 above the second low-pressure chamber 43. The gas release line 95 extends from the second wall structure 46 to the upper region in the suction container 12. The bubbles generated in the gap between the outer circumferential surface of the rotation shaft 1 and the inner circumferential surface of the sliding bearing 55 are carried to the upper region in the suction container 12 through the gas release line 95. Therefore, the impellers 2a to 2h do not suck in the bubbles, and the pumping performance is ensured.

As shown in FIG. 17, the upper end opening 95a of the gas relief line 95 is located at a position higher than the suction port 15 of the suction container 12. This is to prevent the bubbles released from the gas relief line 95 from being carried to the inlet 7a of the pump casing 7 by the liquid hydrogen that has been introduced into the suction container 12 through the suction port 15.

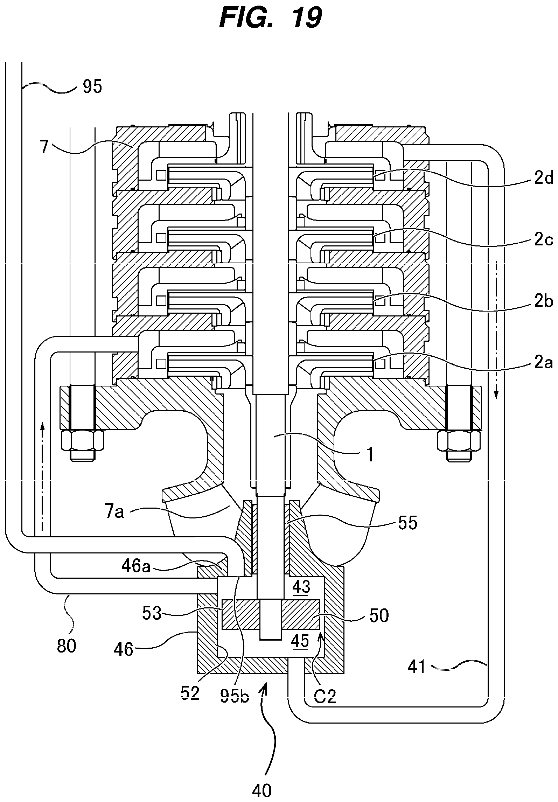

FIG. 19 is a cross-sectional view showing yet another embodiment of a pump apparatus having gas relief line 95. Configuration and operation of this embodiment that will not be specifically described are the same as those of the embodiment described with reference to FIG. 17 and FIG. 18, and therefore repetitive description will be omitted. As shown in FIG. 19, the lower end 95b of the gas relief line 95 communicates with the second low-pressure chamber 43. More specifically, the lower end 95b of the gas relief line 95 is coupled to an upper wall 46a of the second wall structure 46. The gas relief line 95 extends upward from the second low-pressure chamber 43. The bubbles generated in the second low-pressure chamber 43 are carried to the upper region in the suction container 12 through the gas relief line 95. Therefore, the impellers 2a to 2h do not suck in the bubbles, and the pumping performance is ensured.

In one embodiment, the second thrust balance mechanism 40 shown in FIGS. 17 to 19 may be of the variable-gap type shown in FIG. 8. In this case, the first thrust balance mechanism 20 may be of the fixed-gap type shown in FIG. 9.

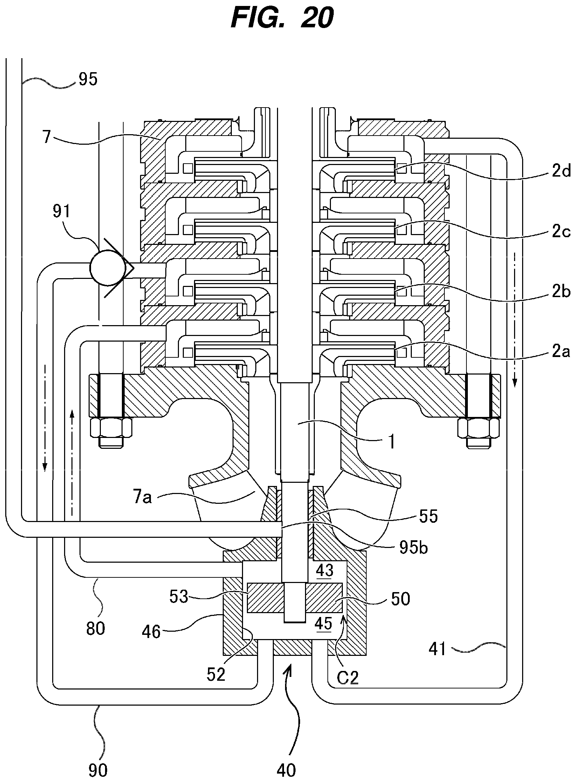

The embodiments described with reference to FIGS. 17 to 19 may be combined with the embodiment described with reference to FIG. 6. For example, as shown in FIG. 20, the pump apparatus further includes the upstream communication line 90 that provides fluid communication between the discharge side of the second-stage impeller 2b serving as the upstream impeller and the second high-pressure chamber 45, and the check valve 91 attached to the upstream communication line 90 and allowing only the flow of liquid hydrogen toward the second high-pressure chamber 45. According to the embodiment shown in FIG. 20, the load on the bearings 5 and 6 at the start of the pump apparatus can be reduced while the pumping performance can be ensured during the steady operation of the pump apparatus.

The above-described embodiments may be combined as appropriate. For example, the embodiments described with reference to FIGS. 5, 6, and 7 may be combined as appropriate with the embodiments described with reference to FIGS. 17, 18, 19, and 20.

According to each of the above-described embodiments, the first thrust balance mechanism 20 and the second thrust balance mechanism 40 can generate an upward force that cancels out the weight of the rotational structure and the axial thrust using the liquid hydrogen having a low density. As a result, the load on the bearings 5, 6 supporting the rotation shaft 1 becomes substantially zero, which reduces damage to the bearings 5, 6 and extends their service lives.

The previous description of embodiments is provided to enable a person skilled in the art to make and use the present invention. Moreover, various modifications to these embodiments will be readily apparent to those skilled in the art, and the generic principles and specific examples defined herein may be applied to other embodiments. Therefore, the present invention is not intended to be limited to the embodiments described herein but is to be accorded the widest scope as defined by limitation of the claims.

### Industrial Applicability

The present invention is applicable to a pump apparatus for pressurizing liquid hydrogen, and more particularly to a pump apparatus having a thrust balance mechanism for cancelling axial thrust applied to an impeller.

### Reference Signs List

- 1: rotation shaft
- 2a-2h: impeller
- 5,6: bearing
- 7: pump casing
- 7a: inlet
- 10: electric motor
- 10A: motor rotor
- 10B: motor stator
- 10C: motor housing
- 12: suction container
- 15: suction port
- 16: discharge passage
- 17: outlet
- 20: first thrust balance mechanism
- 21: communication line
- 23: first low-pressure chamber
- 24: first balance chamber
- 25: first high-pressure chamber
- 26: first wall structure
- 30: first partition
- 30A: first fixed-side partition
- 30B: first rotation-side partition
- 31: stationary surface
- 32: movable surface
- 35: first wear ring
- 36: second wear ring
- 37: diffuser block
- 39: auxiliary impeller
- 40: second thrust balance mechanism
- 41: intermediate communication line
- 43: second low-pressure chamber
- 44: second balance chamber
- 45: second high-pressure chamber
- 46: second wall structure
- 50: second partition
- 52: inner circumferential surface
- 53: outer circumferential surface
- 55: plain bearing
- 57: movable surface
- 58: stationary surface
- 61: inner circumferential surface
- 62: outer circumferential surface
- 71: through-hole
- 75: wear ring
- 80: return line
- 85: check valve
- 90: upstream communication line
- 91: check valve
- 95: gas relief line
- C1,C2,C3,C4,C5,C6: gap

## Claims

1. A pump apparatus for pressurizing liquid hydrogen, comprising:
a rotation shaft;
a plurality of impellers fixed to the rotation shaft;
a bearing configured to rotatably support the rotation shaft;
a pump casing in which the plurality of impellers are disposed; and
a first thrust balance mechanism and a second thrust balance mechanism configured to cancel weight of a rotational structure including the rotation shaft and the plurality of impellers and an axial thrust acting on the plurality of impellers,
wherein the second thrust balance mechanism includes:
a wall structure having a low-pressure chamber and a high-pressure chamber formed therein; and
a partition located in the wall structure and located between the low-pressure chamber and the high-pressure chamber,
the pump apparatus further comprises:
an intermediate communication line providing fluid communication between the high-pressure chamber and a discharge side of an intermediate-stage impeller or a final-stage impeller of the plurality of impellers; and
a return line providing fluid communication between the low-pressure chamber and a discharge side of a suction-side impeller located upstream of the intermediate-stage impeller or the final-stage impeller.

2. The pump apparatus according to claim 1, further comprising a check valve attached to the return line to allow the liquid hydrogen to flow only from the low-pressure chamber to the suction-side impeller.

3. The pump apparatus according to claim 1, further comprising:
an upstream communication line that provides fluid communication between the high-pressure chamber and a discharge side of an upstream impeller located between the intermediate-stage impeller or the final-stage impeller and the suction-side impeller; and
a check valve attached to the upstream communication line to allow the liquid hydrogen to flow only from the upstream impeller to the high-pressure chamber.

4. The pump apparatus according to claim 1, wherein the first thrust balance mechanism is disposed at a discharge side of the plurality of impellers, and the second thrust balance mechanism is disposed at a suction side of the plurality of impellers.

5. The pump apparatus according to claim 4, further comprising:
a suction container having a suction port for the liquid hydrogen and surrounding the pump casing; and
a gas relief line extending from the wall structure to an upper region in the suction container, the gas relief line having a lower end opening located above the low-pressure chamber and facing an outer circumferential surface of the rotation shaft.

6. The pump apparatus according to claim 1, wherein the wall structure has an inner circumferential surface parallel to an axial direction of the rotation shaft, the partition has an outer circumferential surface parallel to the axial direction of the rotation shaft, and the entire outer circumferential surface of the partition is surrounded by the inner circumferential surface of the wall structure with a gap formed therebetween.

7. The pump apparatus according to claim 1, wherein the second thrust balance mechanism further includes a balance chamber located between the low-pressure chamber and the high-pressure chamber, a variable gap is formed between the partition and the wall structure, and a magnitude of the variable gap changes according to an axial position of the rotation shaft.

8. The pump apparatus according to claim 1, wherein the first thrust balance mechanism and the second thrust balance mechanism are disposed at a discharge side of the plurality of impellers.

9. The pump apparatus according to claim 1, wherein the first thrust balance mechanism includes:
a first wall structure having a first low-pressure chamber, a first balance chamber, and a first high-pressure chamber formed therein; and
the first partition located in the first wall structure and between the first low-pressure chamber and the first balance chamber,
wherein a variable gap is formed between the first partition and the rotational structure including the rotation shaft and the plurality of impellers, and a magnitude of the variable gap changes according to an axial position of the rotation shaft.

10. The pump apparatus according to claim 1, wherein the first thrust balance mechanism includes:
a first wall structure having a first low-pressure chamber and a first high-pressure chamber formed therein; and
the first partition located in the first wall structure and between the first low-pressure chamber and the first high-pressure chamber,
wherein a radial gap is formed between an outer circumferential surface of the first partition and an inner circumferential surface of the first wall structure, and a magnitude of the radial gap does not change regardless of an axial position of the rotation shaft.

11. A pump apparatus for pressurizing liquid hydrogen, comprising:
a rotation shaft;
a plurality of impellers fixed to the rotation shaft;
a bearing configured to rotatably support the rotation shaft;
a pump casing in which the plurality of impellers are disposed;
a suction container having a suction port for the liquid hydrogen and surrounding the pump casing;
a gas relief line; and
a thrust balance mechanism configured to cancel weight of a rotational structure including the rotation shaft and the plurality of impellers and an axial thrust acting on the plurality of impellers,
wherein the thrust balance mechanism includes:
a wall structure having a low-pressure chamber and a high-pressure chamber formed therein; and
a partition disposed in the wall structure and between the low-pressure chamber and the high-pressure chamber,
the gas relief line extends from the wall structure to an upper region in the suction container, and
the gas relief line has a lower end communicating with the low-pressure chamber.
